# EUROPEAN PATENT APPLICATION

(11) **EP 1 600 661 A1**
(43) Date of publication of application: **30.11.2005**
(21) Application number: 05011371.1
(22) Date of filing: 25.05.2005
(51) Int. Cl.: F16F 9/32

(54) **Structure of piston for hydraulic shock absorber**

(30) Priority: 27.05.2004 JP 2004157192
(71) Applicant: KAYABA INDUSTRY CO., LTD., Minato-ku, Tokyo 105-6190 (JP)
(72) Inventor: Oota, Akihisa c/o KAYABA INDUSTRY CO., LTD., Minato-ku Tokyo 105-6190 (JP); Noritake, Atsushi c/o KAYABA INDUSTRY CO., LTD., Minato-ku Tokyo 105-6190 (JP)
(74) Representative: Grünecker, Kinkeldey, Stockmair & Schwanhäusser Anwaltssozietät

(57) **Abstract**

A piston rod insert axis portion 3 is provided in a top end of a piston rod 2 entering into and going out from a cylinder 1, a piston 4 is inserted into the piston rod insert axis portion 3, and the piston 4, as well as damping valves 6 and 7 similarly inserted into the piston rod insert axis portion 3 are clamped and fixed by a nut 8. The piston rod insert axis portion 3 is formed separately from the piston rod 2, as well as the piston rod insert axis portion 3 and the a base end of the piston rod 2 are connected by a screw bore 11 and a screw shaft 12 as fixation members.

## Description

### BACKGROUND OF THE INVENTION

### Field of the Invention

The present invention relates to a hydraulic shock absorber used for a suspension in an automobile or the like, and in particular, to a structure of a piston therefor.

### The Related Art of the Invention

There has been conventionally known a manufacturing method of incorporating a piston with a plurality of damping valves into a hydraulic shock absorber, which is disclosed in Japanese Unexamined Patent Publication No. 2001 - 20991.

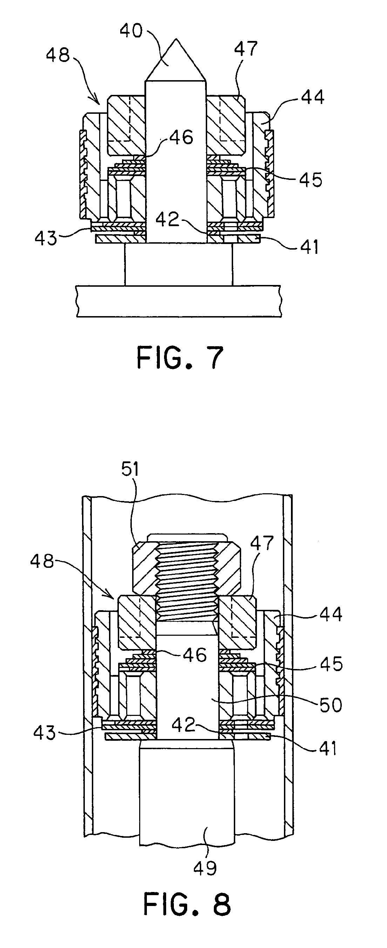

In order to temporarily assembling a piston, as shown in FIG. 7, a compression-side valve stopper 41, a compression-side washer 42, a compression-side damping valve 43, a piston 44, an expansion-side damping valve 45, an expansion-side washer 46, and an expansion-side valve stopper 47 are sequentially inserted and stacked to form a piston assembly body 48 in a temporary assembling state, which is transported to an assembling process to a piston rod 49.

In the assembling process of the piston assembly body 48 to the piston rod 49, an operator grabs the piston assembly body 48 in the temporary assembling state one handed, which is then removed from the holder 40 and, as shown in FIG. 8, incorporated into a piston rod insert axis portion 50 disposed in a base end of the piston rod 49 in place of the holder 40. Thereafter, a piston nut 51 is screwed into the piston rod insert axis portion 50 from an upper side of the piston assembly body 48 to fix the piston assembly body 48 to the base end of the piston rod 49.

### SUMMARY OF THE INVENTION

However, if in an assembling job of the piston assembly body 48 to the piston rod 49, components of the piston assembly body 48 removed from the holder 40 are radially deviated with each other from its center, when the piston assembly body 48 is inserted into the piston rod insert axis portion 50 of the piston rod 49, the insert of the piston assembly 48 into the piston rod insert axis portion 50 is not smoothly performed, possibly deteriorating work efficiency during the assembling.

The present invention, from a viewpoint of the foregoing problems, has an object of providing a structure of a piston for a hydraulic shock absorber, which can easily incorporate a piston to a piston rod, provide an easy assembling job, and reduce assembling costs.

In order to achieve above the object the present invention comprises a hydraulic shock absorber provided with a cylinder, a piston sliding in the cylinder, and a piston rod to a top end of which the piston is connected. The hydraulic shock absorber comprises a piston rod insert axis portion formed separately from the piston rod, a damping valve inserted and fixed in the piston rod insert axis portion together with the piston, and a combination member combining the piston rod insert axis portion with the top end of the piston rod.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Preferred embodiments according to the invention will be explained below referring to the drawings, wherein:
FIG. 1 is a cross sectional view showing a substantial part of a piston assembly structure for a hydraulic shock absorber in a preferred embodiment of the present invention;
FIG. 2 is a cross sectional view of a substantial part showing an assembling method of a piston in FIG. 1;
FIG. 3 is a cross sectional view of a substantial part showing a different preferred embodiment from the preferred embodiment in FIG. 1;
FIG. 4 is a cross sectional view of a substantial part showing a further preferred embodiment from the preferred embodiment in FIG. 1;
FIG. 5 is a cross sectional view of a substantial part showing a furthermore preferred embodiment from the preferred embodiment in FIG. 1;
FIG. 6 is a cross sectional view of a substantial part showing a furthermore different preferred embodiment from the preferred embodiment in FIG. 1;
FIG. 7 shows a conventional example and is a cross sectional view of a substantial part showing an assembling state of a piston unit; and
FIG. 8 shows the same conventional example and is a cross sectional view of a substantial part showing a state where the piston in FIG. 7 is incorporated in the piston rod.

### DETAILED DESCRIPTION OF THE PREFERRED EMBODIMENT

Selected preferred embodiments of the present invention will now be explained with reference to the drawings. It will be apparent to those skilled in the art from this disclosure that the following description of the preferred embodiments of the present invention is provided for illustration only, and not for the purpose of limiting the invention as defined by the appended claims and their equivalents.

Preferred embodiments of a hydraulic shock absorber used in a suspension for an automobile to which the present invention is applied will be explained with reference to the accompanying drawings.

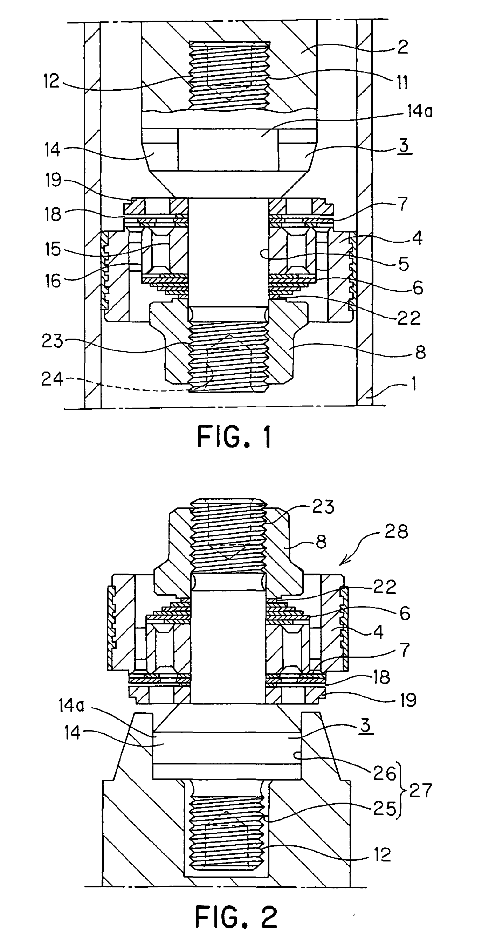

As shown in FIG. 1, a piston rod 2 connected to a piston 4 is located in a cylinder 1. A piston rod insert axis portion 3 is provided in a top end of the piston rod 2, and the piston 4 is inserted in the piston rod insert axis portion 3. The piston 4 is bolted together with an expansion-side damping valve 6 and a compression-side damping valve 7 each provided on each face of the piston 4 by a nut 8.

In more detail, as shown below, a screw bore 11 having a female screw on an inner peripheral surface is formed in an axis center of the top end of the piston rod 2 and a screw shaft 12 having a male screw threaded into the female screw is formed in the piston rod insert axis portion 3 formed separately from the piston rod 2.

Threading the screw shaft 12 of the piston rod insert axis portion 3 into the screw hole 11 allows the piston rod insert axis portion 3 to be mounted and fixed coaxially to the top end of the piston rod 2.

An engagement member 14 having a diameter larger than that of the screw shaft 12 is formed integrally with the piston rod insert axis portion 3 in the half thereof. A pair of flat faces 14a are formed in part of an outer peripheral surface of the engagement member 14. And a screw portion 23 having a male screw is provided in the top end of the piston rod insert axis portion 3 to screw the piston nut 8 therein to be described later.

A mounting bore 5 is provided in the center of the piston 4 so as to go through the piston 4, which is inserted through the mounting bore 5 into the piston rod insert axis portion 3. An expansion-side port 15 and a compression-side port 16 are formed in the piston 4.

The compression-side damping valve 7 composed of a plurality of leaf valves opening/closing the compression-side port 16 is inserted in the piston rod insert axis portion 3 at a back side (refer to an upper face in FIG. 1) of the piston 4, and a washer 18 and a valve stopper 19 are inserted similarly therein and arranged on the upper face of the compression-side damping valve 7.

The expansion-side damping valve 6 composed of a plurality of leaf valves opening/closing the expansion-side port 15 is inserted in the piston rod insert axis portion 3 at a front side (refer to a lower face in FIG. 1) of the piston 4, and further , a washer 22 is inserted therein.

Threading the piston nut 8 into the screw portion 23 allows the compression-side valve stopper 19, the washer 18, the compression-side damping valve 7, the piston 4, the expansion-side damping valve 6, and the washer 22 to be clamped and fixed between the engagement member 14 and the piston nut 8.

In such fixed state, each of the compression-side and the expansion-side damping valve 6 and 7 is supported radially at an inner peripheral portion thereof between the engagement member 14 and the piston nut 8, and is flexible and deformable freely at an outer peripheral portion thereof.

Note that a clamp bore 24 for inserting a hexagonal head bolt wrench is provided in the top end of the piston rod insert axis portion 3, and insert and rotation of the hexagonal head bolt wrench in the clamp bore 24 causes the piston rod insert axis portion 3 to be screwed into the screw bore 11 of the piston rod 2.

A piston structure unit configured as above will be assembled as below.

As shown in FIG. 2, a tool 27 is prepared for temporarily assembling the piston structure unit. The tool 27 is provided with a concave portion 25 in which the screw shaft 12 of the piston rod insert axis portion 3 is inserted with a clearance between the screw shaft 12 and the concave portion 25, and an engagement portion 26 in which the flat portion 14a of the engagement member 14 is inserted and engaged. The piston rod insert axis portion 3 is inserted and supported in the opposite directions to the upper and lower directions in FIG. 1.

In this state, the engagement member 14 of the piston rod insert axis portion 3 is unrotatably fixed to the engagement portion 26 of the tool 27, and the compression-side valve stopper 19, the washer 18, a plurality of the compression-side damping valves 7, the piston 4, a plurality of the expansion-side damping valves 6, and the washer 22 are sequentially stacked and inserted.

Then, when the piston nut 8 is screwed into the screw shaft 23 of the piston rod insert axis portion 3, each component as described above is clamped and fixed between the engagement member 14 and the piston nut 8 to form a piston assembly body 28 which serves as a piston unit.

Next, the piston assembly body 28 as formed in such a way is transported to an assembling process to the piston rod 2.

In the assembling process to the piston rod 2, an operator removes the piston assembly body 28 from the tool 27 and then, the screw shaft 12 of the piston rod insert axis portion 3 is fitted into the screw bore 11 of the piston rod 2 to insert the hexagonal head bolt wrench (not shown) into the clamp bore 24, thereby rotating the piston rod insert axis portion 3.

Then, as shown in FIG. 1, the screw shaft 12 provided in the top end of the piston rod insert axis portion 3 is threaded into the screw bore 11, thus fixing the piston rod insert axis portion 3 securely to the piston rod 2 as shown in FIG. 1.

With such a way, the compression-side valve stopper 19, the washer 18, a plurality of the compression-side damping valves 7, the piston 4, a plurality of the expansion-side damping valves 6, and the washer 22 are sequentially stacked and inserted in the piston rod insert axis portion 3 formed separately from the piston rod 2, which are clamped and fixed by the piston nut 8, thereby completing the piston assembly body 28 beforehand. Only threading the piston assembly body 28 into the screw bore 11 of the piston rod 2 causes the piston 4 to be incorporated to the piston rod 2.

Accordingly, since it is not required to remove the piston assembly body 28 in a temporary assembling state from the holder 40 in the same way with the conventional art, an assembling job to the piston rod 2 can be carried out easily and for a short time, thereby reducing assembling costs with an improved work efficiency.

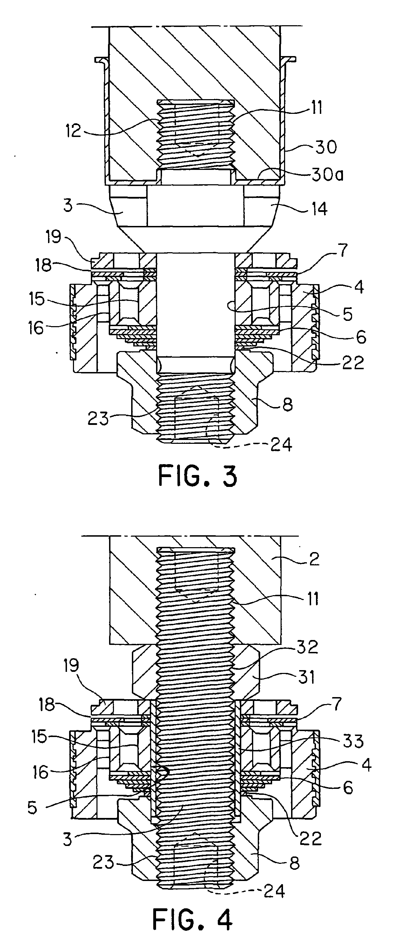

Next, a different preferred embodiment of the present invention will be explained with reference to FIG. 3.

As shown in FIG. 3, a thin, cylindrical, and expansion regulation member 30 may be interposed between the engagement portion 14 and the piston rod 2. A bottom portion 30a of the expansion regulation member 30 is placed and fixed between the top end of the piston rod 2 and the engagement member 14 of the piston rod insert axis portion 3.

The expansion regulation member 30 is brought into contact with an inner periphery of an top end of the cylinder 1 at the state where the piston rod 2 is expanded at the maximum, thereby blocking the further expansion of the piston rod 2.

This allows the expansion regulation member 30 to be easily fixed to the piston rod 2 without welding or the like.

Next, a further preferred embodiment of the present invention will be explained with reference to FIG. 4.

In the preferred embodiment, an alternative to the engagement member 14 in the above-described preferred embodiment is a movable engagement member 31 having a nut structure formed separately from the piston rod insert axis portion 3, and the piston rod insert axis portion 3 is formed in a bar shape on an entire outer periphery of which a male screw portion 32 is formed.

With this, a position of incorporating the piston 4 to the piston rod 2 can be adjusted in any position of the upper and lower directions, thus providing an effect of expanded versatility.

Note that since the male screw portion 32 is formed on the entire outer periphery of the piston rod insert axis portion 3 in this case, operating oil possibly leaks from a clearance between the male screw portion 32 and each inner peripheral surface of the compression-side damping valve unit 7 and the expansion-side damping valve unit 6. Therefore, a cylindrical collar 33 is inserted into an inner periphery of a mounting bore 5 of the piston 4 to seal the outer peripheral surface of the male screw portion 32, thereby preventing leakage of the operating oil.

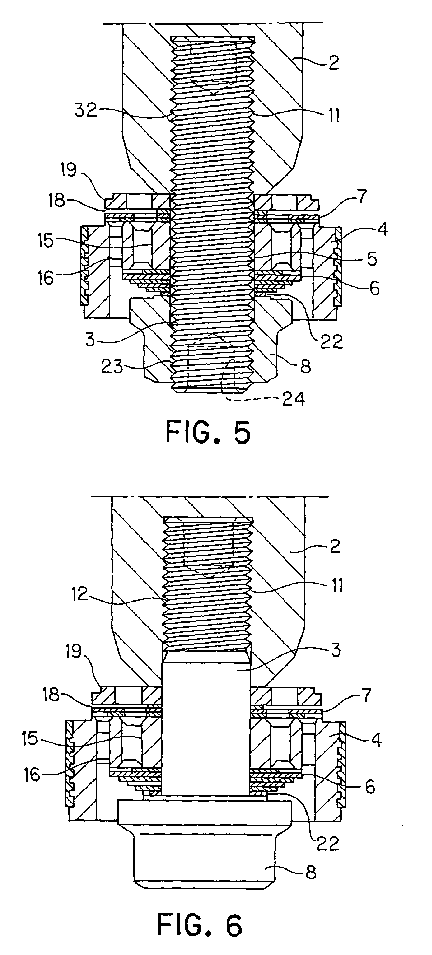

Further, a furthermore preferred embodiment of the present invention will be explained with reference to FIG. 5.

In the preferred embodiment, the engagement member 31 in FIG. 4 is not used.

That is, firstly the piston nut 8 is screwed into the piston rod insert axis portion 3 formed in a bar shape. In this state, the piston nut 8 is placed on the tool to be positioned in a lower side of the piston rod insert axis portion 3 as opposite to an upper side in FIG. 2.

Then, the washer 22, a plurality of the expansion-side damping valves 6, the piston 4, the washer 18, a plurality of the compression-side damping valves 7, and the valve stopper 19 are sequentially inserted, thereby forming the piston assembly body 28. The top end of the male screw portion 32 of the piston rod insert axis portion 3 in the piston assembly body 28 is screwed and fixed into the screw bore 11 of the piston rod 2, thus completing the incorporation to the piston rod 2.

Note that although the piston assembly body 28 is not fixed to the piston rod insert axis portion 3, the piston assembly body 28 does not drop down so long as the piston assembly body 28 is not positioned to be directed downwards, an assembly work efficiency can be maintained properly. And since the piston assembly body 28 is held between the piston nut 8 and a lower end of the piston rod 2, the engagement member 31 becomes unnecessary, thus reducing the number of components and shortening an axial length of the piston.

Further, a furthermore different preferred embodiment of the present invention will be explained with reference to FIG. 6.

The preferred embodiment differs from the preferred embodiment in FIG. 5 in that the piston nut 8 is formed integrally with the piston rod insert axis portion 3.

The piston nut 8 is formed integrally with the piston rod insert axis portion 3 and the screw shaft 12 is formed in an end as opposite to the piston nut 8 to be screwed into the screw bore 11 of the piston rod 2. Note that since the male screw is not formed in a portion of the piston rod insert axis portion 3 into which the piston 4 or the like is inserted, there exists no clearance between the piston rod insert axis portion 3 and an inner peripheral surface of the expansion-side damping valve 6, the compression-side damping valve 7, or the piston, thus avoiding leakage of the operating oil.

In this case, an assembling process of the piston is the same as that in FIG. 5. In the state in Fig. 6, the expansion-side damping valve 6, the compression-side damping valve 7, the piston 4, and the like are incorporated into the piston rod insert axis portion 3 to form the piston assembly body 28, and thereafter, the screw shaft 12 is screwed into the top end of the piston rod 2 to fix the piston assembly body 28.

This results in reduction of the number in components and reduction of assembling costs.

In the above-described preferred embodiments, the piston rod insert axis portion and the base end of the piston rod are combined by a screw joint, but the present invention is not limited to this, and may adopt any fixation structure thereof.

It is apparent to those skilled in the art that the present invention includes various improvements and modifications within the scope of the technical concept of the present invention as defined in the appended claims.

This application claims priority to Japanese Patent Application No. 2004-157192. The entire disclosure of Japanese Patent Application No. 2004-157192 is hereby incorporated herein by reference.

## Claims

1. A hydraulic shock absorber provided with a cylinder, a piston sliding in the cylinder, and a piston rod to a top end of which the piston is connected, comprising:
a piston rod insert axis portion formed separately from the piston rod;
a damping valve inserted and fixed in the piston rod insert axis portion together with the piston; and
a combination member combining the piston rod insert axis portion with the top end of the piston rod.

2. The hydraulic shock absorber according to claim 1, wherein:
an expansion-side port and a compression-side port are formed in the piston; and
the damping valve includes an expansion-side damping valve arranged in one face of the piston to open/close the expansion-side port and a compression-side damping valve arranged in the other face of the piston to open/close the compression-side port.

3. The hydraulic shock absorber according to claim 2, wherein:
the combination member includes;
a screw bore provided in the top end of the piston rod, and
a screw shaft provided in the piston rod insert axis portion to be screwed into the screw bore.

4. The hydraulic shock absorber according to claim 3, wherein:
the piston rod insert axis portion is provided with an engagement member positioned at a halfway of the piston rod insert axis portion, and a screw portion positioned at a top end of the piston rod insert axis portion, the hydraulic shock absorber further comprising:
a piston nut screwed into the screw portion to clamp and fix the piston and the damping valve between the piston nut and the engagement member.

5. The hydraulic shock absorber according to claim 4, wherein:
the engagement member is screwed into the piston rod insert axis portion.

6. The hydraulic shock absorber according to claim 3, wherein:
the piston rod insert axis portion is provided with a screw portion, the hydraulic shock absorber further comprising:
a piston nut screwed into the screw portion, wherein:
the piston and the damping valve are clamped and fixed between the piston nut and the top end of the piston rod.

7. The hydraulic shock absorber according to claim 3, further comprising:
a piston nut formed integrally with an end of the piston rod insert axis portion, wherein:
the piston and the damping valve are clamped and fixed between the piston nut and the top end of the piston rod.
